Europäisches Patentamt

European Patent Office

Office européen des brevets

(19)

(11) Veröffentlichungsnummer: **0 263 964 B1**

(12) **EUROPÄISCHE PATENTSCHRIFT**

(45) Veröffentlichungstag der Patentschrift: **06.11.91**

(51) Int. Cl.⁵: **B29C 33/68**, B32B 27/32

(21) Anmeldenummer: **87112933.4**

(22) Anmeldetag: **04.09.87**

(54) Mehrschichtfolie als Trennfolie zur Herstellung dekorativer Schichtstoffplatten.

(30) Priorität: **13.09.86 DE 3631232**

(43) Veröffentlichungstag der Anmeldung:
**20.04.88 Patentblatt 88/16**

(45) Bekanntmachung des Hinweises auf die
Patenterteilung:
**06.11.91 Patentblatt 91/45**

(84) Benannte Vertragsstaaten:
**BE DE ES FR GB IT NL**

(56) Entgegenhaltungen:
EP-A- 0 062 815   EP-A- 0 114 312
EP-A- 0 143 130   EP-A- 0 184 094
EP-A- 0 201 799   EP-A- 0 234 758

(73) Patentinhaber: **HOECHST AKTIENGESELL-
SCHAFT
Postfach 80 03 20
W-6230 Frankfurt am Main 80(DE)**

(72) Erfinder: **Crass, Günther
Bachstrasse 7
W-6204 Taunusstein 4(DE)**
Erfinder: **Bothe, Lothar, Dr.
Am Heiligenhaus 9
W-6500 Mainz-Gonsenheim(DE)**
Erfinder: **Schlögl, Gunter, Dr.
Finkenweg 2
W-6233 Kelkheim(DE)**

EP 0 263 964 B1

Rank Xerox (UK) Business Services

**Beschreibung**

Die Erfindung betrifft eine durch Coextrusion hergestellte biaxial streckorientierte Mehrschichtfolie im wesentlichen aus einem Propylenhomopolymeren, aufgebaut aus einer hochpigmentierten Basisschicht und einer ein- oder beidseitigen dünnen modifizierten Deckschicht. Die Erfindung betrifft ferner ein Verfahren zu ihrer Herstellung und ihre Verwendung.

Dekorative Schichtstoffplatten sind zur Herstellung von Möbeln für den Innenbereich, z.B. für Büromöbel und Küchenmöbel, als auch für den Außenbereich, z.B. in Form von Fensterbänken etc., weit verbreitet. Spezielle Typen finden zudem Anwendung auch unter extremen Bedingungen wie z.B. in Naßzellen oder als Arbeitsplatten in chemischen Labors. Besonders die zuletzt genannten Bedingungen verlangen nach Platten, die besonders kratzunempfindlich und gegenüber organischen und wäßrigen Lösungsmitteln und Reinigungsmitteln besonders widerstandsfähig sind. Die Oberflächenstruktur spielt für diese Besonderheiten, neben einer speziellen optischen Note, eine herausragende Rolle.

Schichtstoffplatten der genannten Art sind z.B. in der DE-A-3 418 282 beschrieben. Die Kernschicht einer Schichtstoffplatte besteht in der Regel aus mehreren Lagen mit Phenolharz imprägnierter Papierbahnen. Auf dieser Kernschicht befindet sich meist ein unifarbenes oder in Muster bedrucktes, mit einem Melaminharz imprägniertes Cellulosepapier als Deckschicht.

Vor der eigentlichen Verpressung der Kernschicht mit der(n) Deckschicht(en) werden die harzgetränkten Papiere der Kern- und Deckschichten getrocknet und dadurch teilkondensiert. Die daran anschließende eigentliche Verpressung geschieht heute größtenteils auf heiz- oder kühlbaren, automatisch gesteuerten Mehretagenpressen, in denen bis zu 40 Schichtstoffplatten gleichzeitig gepreßt werden können. Sogenannte "high pressure laminates" (H.P.L.Platten) werden bei Drücken zwischen 70 und 100 bar und Temperaturen zwischen 140 und 160°C gepreßt. Während der Verpressung fließen die Harze und werden gehärtet, wodurch die einzelnen Lagen des Kerns und die Oberflächenschicht(en) ein in sich geschlossenes, nicht schmelzbares, starres vernetztes Produkt bilden. Als Preßvorrichtungen sind stationäre und kontinuierliche Vorrichtungen sowie Durchlaufvorrichtungen bekannt.

Wird eine Vielzahl von Platten in den Pressen übereinandergestapelt, was bei geringer Dicke der Kernschicht wirtschaftlich von Vorteil ist, so müssen die einzelnen Platten jeweils durch Trennmedien voneinander getrennt werden. Als Trennmedium wurden zur Erzielung von glatten Oberflächen polierte Bleche mit ebener hochglänzender Oberfläche eingesetzt. Sollen die Schichtstoffplatten an ihrer Oberfläche eine Struktur oder eine Mattierung (z.B. Holzmaserung, Gewebestruktur) aufweisen, so ist der Einsatz von entsprechend strukturierten Matrizen erforderlich.

Um ein Verkleben von Matrizen und Harzoberflächen bei Verwendung von strukturierten Matrizen zu unterbinden, muß in diesem Fall ein zusätzliches Trennmedium zwischen dem eigentlichen Trennmedium und der Oberfläche der Schichtstoffplatte eingeschoben werden. Hierfür wird neben Papier und Aluminiumfolie auch vermehrt biaxial streckorientierte Polypropylenfolie verwendet.

Beim Einsatz glasklarer (transparenter) streckorientierter Polypropylenfolien als Trennmedium werden hochglänzende Oberflächen erzeugt. Werden dagegen matte Oberflächen gewünscht, so muß man weiterhin auf gebürstete Aluminiumfolien als Trennmedien zurückgreifen. Neuerdings werden hierfür allerdings auch hochpigmentierte, biaxial streckorientierte Polyesterfolien eingesetzt. Beide Trennmedien zur Erzielung matter oder strukturierter Oberflächen haben jedoch den Nachteil, relativ teuer zu sein.

So wurde versucht, anstelle der teuren hochpigmentierten Polyesterfolien eine ebenfalls hochpigmentierte, d.h. opake Polyolefinfolie als Trennmedium einzusetzen. Solche Folien sind in der DE-A-2 814 311 (EP-A-0 004 633) beschrieben. Bei der Plattenherstellung besteht jedoch die Gefahr, daß die Oberflächen der Schichtstoffplatten mit den Trennfolien verkleben Darüber hinaus wird in der EP-A-0 184 094 eine siegelfähige transparente polyolefinische Mehrschichtfolie beschrieben, welche aus einer Basisschicht aus einem Propylenpolymeren und einer siegelfähigen und einer nicht siegelfähigen Deckschicht aufgebaut ist, wobei die nichtsiegelfähige Deckschicht ein anorganisches Pigment, ein Gleitmittel wie Polydiorganosiloxan und ein Propylenhomopolymer enthält. Auch diese Folien eignen sich aufgrund ihrer klebenden Deckschicht nicht als Trennfolien für die Schichtstoffherstellung.

Aufgabe der Erfindung war es daher, eine Trennfolie zur Herstellung matter, strukturierter Schichtstoffplatten bereitzustellen, die allen beschriebenen technischen Anforderungen gerecht wird, d.h. die sich nach dem Verpressen leicht von den Oberflächen der Schichtstoffplatten trennen läßt, die ein zufriedenstellendes Rauhigkeitsprofil aufweist und die außerdem preiswerter als die bisher verwendeten Materialien ist.

Gelöst wird diese Aufgabe durch Bereitstellen einer durch Coextrusion hergestellten biaxial streckorientierten Mehrschichtfolie geeignet als Trennfolie zur Herstellung von dekorativen Schichtstoffplatten mit matter Oberflächenstruktur. Die Folie umfaßt eine Basisschicht im wesentlichen aus Polypropylen und mindestens eine Deckschicht und ist dadurch gekennzeichnet, daß die Basisschicht einen Anteil von 3 bis 30 Gew.% an teilchenförmigen anorganischen Pigmenten enthält und die Deckschicht im wesentlichen

a) 98,5 bis 99,6 Gew.-% eines Propylenpolymeren und

b) 0,4 bis 1,5 Gew.-% eines Polydiorganosiloxans,

jeweils bezogen auf das Gewicht der Deckschicht, enthält.

Überraschenderweise zeigte sich, daß die erfindungsgemäße Mehrschichtfolie zum einen die geforderte matte Oberflächenstruktur der Schichtstoffplatten gewährleistet, zum anderen sich aber nach dem Verpressen problemlos von dieser lösen läßt.

Das Polypropylen, aus dem erfindungsgemäß die Basisschicht und die Deckschicht(en) gebildet sind, kann ein Homo- oder ein Copolymeres (Blockcopolymeres oder statistisches Copolymeres) des Propylens oder eine Mischung aus Propylenhomo- und/oder Propylencopolymeren sein. Der Comonomeranteil beträgt bis zu 20 Gew.-%, vorzugsweise bis zu 10 Gew.-%, bezogen auf das Copolymere. Geeignete Comonomere sind Ethylen und $C_4$-$C_6$-$\alpha$-Olefine, wobei Ethylen bevorzugt ist.

Als Polypropylen werden vorzugsweise Propylenhomopolymere und Copolymere des Propylens mit bis zu 10 Gew.-% Ethylen als Comonomeres eingesetzt.

Der Gehalt an Polypropylen in der Basisschicht beträgt 75 bis 97 Gew.-%, vorzugsweise 70 bis 95 Gew.-%, bezogen auf das Gewicht der Basisschicht. Die Deckschicht enthält 98,5 bis 99,6 Gew.-% Polypropylen, bezogen auf das Gewicht der Deckschicht.

Der Schmelzindex des Polypropylens der Basisschicht liegt im Bereich von 0,5 bis 5 g/10 min, insbesondere aber zwischen 1 und 3 g/10 min. Der Schmelzindex des Polypropylens der Deckschicht(en) beträgt 1,5 bis 20 g/10 min, insbesondere 3 bis 10 g/10 min, wobei vorzugsweise der Schmelzindex der Basisschicht möglichst kleiner sein soll als derjenige der Deckschicht(en). Die Schmelzindices wurden bei 230 °C und einer Belastung von 2,16 kp nach DIN 53 735 bestimmt.

Erfindungsgemäß enthält die Basisschicht einen Anteil von 3 bis 30 Gew.-% an teilchenförmigen anorganischen Pigmenten. Insbesondere liegt der Gehalt bei 5 bis 25 Gew.-%, bezogen auf das Gewicht der Basisschicht.

Als anorganische Pigmente in der Basisschicht sind vorzugsweise Bariumsulfat, Calciumcarbonat, Alkalimetallsilicat, Aluminiumsilicat, Alkalimetall-Aluminiumsilicat, Siliciumdioxid oder Titandioxid oder eine Mischung aus zwei oder mehreren dieser Pigmente zu nennen. Besonders bevorzugt als anorganisches Pigment sind entweder Siliciumverbindungen oder Erdalkalicarbonate. Die mittlere Teilchengröße (der mittlere Teilchendurchmesser) der pulverförmigen Pigmente liegt im Bereich von 1 bis 10 $\mu$m, vorzugsweise im Bereich von 1 bis 4 $\mu$m.

Die mindestens einseitig auf die Basisschicht aufgebrachte Deckschicht enthält erfindungsgemäß einen geringen Anteil eines Polydiorganosiloxans als antiadhäsiven Wirkstoff. Das Polydiorganosiloxan ist in der Regel ein Polydialkylsiloxan, wobei Polydi($C_1$-$C_4$)-alkylsiloxane bevorzugt sind. Polydimethylsiloxan ist besonders bevorzugt. Das Polydiorganosiloxan hat eine Viskosität von mindestens 100 mm²/s bei 25 °C, vorzugsweise 1 000 bis 100 000 mm²/s, insbesondere 20 000 bis 50 000 mm²/s. Die Menge an Polydiorganosiloxan in den Deckschichten beträgt jeweils vorzugsweise 0,6 bis 1,2 Gew.-%, bezogen auf das Gewicht der Deckschicht.

Die Oberflächenrauhigkeit $R_z$ der Deckschicht beträgt vorzugsweise 1,0 bis 3,0 $\mu$m. Sie wurde bestimmt nach DIN 47 68. Die Einstellung der Oberflächenrauhigkeit z.B. bei Polypropylen geschieht normalerweise bei der Herstellung der Folie durch gezielte thermische Beeinflussung der Morphologie ($\beta$-$\alpha$-Kristallit-Umwandlung) des Polypropylens. Geeignete Verfahren sind in der DE-C- 2 740 237 und der DE-C-2 942 298 beschrieben.

Die Gesamtdicke der erfindungsgemäßen Trennfolie kann innerhalb weiter Grenzen variieren. Sie liegt im allgemeinen im Bereich von 20 bis 60 $\mu$m, vorzugsweise 25 bis 50 $\mu$m. Die Dicke der antiadhäsiven Deckschicht beträgt 0,3 bis 5 $\mu$m, insbesondere 0,5 bis 2,5 $\mu$m.

Die Herstellung der erfindungsgemäßen Trennfolie erfolgt nach dem bekannten Coextrusionsverfahren. Dabei werden die den Schichten der Folie entsprechenden Schmelzen durch eine Flachdüse coextrudiert, die coextrudierte Folie zur Verfestigung abgekühlt, die verfestigte Folie biaxial verstreckt, in Längsrichtung vorzugsweise um das 4- bis 7fache und in Querrichtung vorzugsweise um das 7- bis 10fache, und die biaxial gestreckte Folie thermofixiert. Zunächst werden also die der Basisschicht und den beiden Deckschichten entsprechenden Mischungen (Formmassen) durch Mischen der einzelnen Komponenten bereitet. Diese Mischungen werden in einem Extruder verflüssigt und komprimiert. Die erhaltenen Schmelzen werden dann gleichzeitig durch eine Flachdüse (Breitschlitzdüse) gepreßt, und die ausgepreßte mehrschichtige Folie wird auf einer oder mehreren Walzen, die durch Kühlung auf etwa 30 bis 50 °C gehalten werden, abgekühlt und verfestigt. Die Längsstreckung wird vorzugsweise bei einer Folientemperatur von 120 bis 140 °C durchgeführt, die Querstreckung vorzugsweise bei einer Folientemperatur von 160 bis 180°C. Die biaxiale Streckung wird vorzugsweise nacheinander, und zwar zuerst längs und dann quer vorgenommen. Das Längsstrecken wird man zweckmäßigerweise mit Hilfe zweier entsprechend dem angestrebten Streckverhältnis verschieden schnell laufender Walzen durchführen und das Querstrecken mit Hilfe eines entsprechenden Kluppenrahmens. Zur Thermofixierung (Wärmebehandlung) wird die Folie etwa 0,5 bis 10 s lang bei einer Temperatur von 150 bis 160°C gehalten.

Die erfindungsgemäße biaxial gestreckte, mindestens eine Deckschicht enthaltende, durch Coextrusion hergestellte Trennfolie stellt eine besonders vorteilhafte und vielseitig einsetzbare Trennfolie dar.

Wie das nachfolgende Beispiel im Verhältnis zu den Vergleichsbeispielen zeigt, wird mit der erfindungsgemäßen Trennfolie eine hinreichend gleichmäßige Mattierung der Oberfläche einer Schichtstoffplatte erreicht, die zudem nach dem Preßvorgang ohne Schwierigkeiten und, ohne verletzt zu werden, von der Schichtstoffoberfläche abgezogen werden kann.

Die erfindungsgemäße Mehrschichtfolie eignet sich als Trennfolie zur Erzeugung mattierter Oberflächen auf Schichtstoffplatten, die z.B. in Küchenmöbeln, Laboreinrichtungen etc. Anwendung finden.

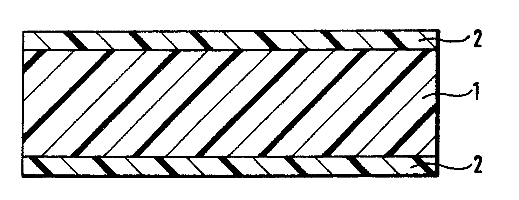

Das Beispiel und die Figur sollen die Erfindung näher erläutern, ohne jedoch den Erfindungsgegenstand zu beschränken.

In der Figur bedeuten (1) die hochpigmentierte Basisschicht und (2) die siloxanmodifizierte Deckschicht.

Beispiel 1

Mit Hilfe des Coextrusionsverfahrens wurde bei einer Extrusionstemperatur von etwa 260°C aus einer Breitschlitzdüse eine dreischichtige Polypropylenfolie mit einer Basisschicht und zwei Deckschichten extrudiert, wobei die Schmelze für die Basisschicht zu 90 Gew.-% aus einem Propylenhomopolymeren mit einem Schmelzindex von 2,0 g/10 min bestand und 10 Gew.-% $CaCO_3$ mit einem mittleren Teilchendurchmesser von 2,8 $\mu$m, bezogen auf das Gewicht der Basisschicht, enthielt. Die Schmelzen für die beiden Deckschichten bestanden jeweils aus einem Propylenhomopolymeren (99,2 Gew.-%) mit einem Schmelzindex von 3,5 g/10 min und 0,8 Gew.-%, bezogen auf das Gewicht der Deckschicht, von einem Polydimethylsiloxan mit einer Viskosität von 25 000 mm²/s bei 25°C. Die auf der Abzugswalze verfestigte Folie wurde in einem Heizkanal auf Strecktemperatur gebracht und zunächst bei 125°C um den Faktor 5 längsgestreckt und anschließend bei 165°C um den Faktor 9 quergestreckt. Die nachfolgende Thermofixierung erfolgte bei 160°C 5 s lang. Die Gesamtdicke der Mehrschichtfolie betrug 40 $\mu$m, die Deckschichten waren jeweils 2 $\mu$m dick.

Die Mehrschichtfolie wurde in einer Mehretagenpresse als Trennfolie zwischen Melaminschichtstoffplatten bei einem Druck von 90 bar und einer Temperatur von 145°C getestet.

Die Verarbeitbarkeit der Mehrschichtfolie als Trennfolie war problemlos, d.h. die Mehrschichtfolie war leicht von der Schichtstoffplatte abzuziehen, und die Oberfläche der Schichtstoffplatte wies die geforderte Mattheit auf.

Vergleichsbeispiel 1

Entsprechend der EP-A-0 004 633 wurde eine eine Gesamtdicke von 40 $\mu$m aufweisende dreischichtige Folie hergestellt. Die Dicken der Deckschichten entsprachen denen, die auch in Beispiel 1 angegeben wurden.

Die Verarbeitbarkeit der Folie als Trennfolie ließ sehr zu wünschen übrig: Die Folie war nach dem Preßvorgang mit der Schichtstoffplatte vollständig verklebt und ließ sich daher nicht sauber von der Plattenoberfläche abziehen. Die Oberfläche der Schichtstoffplatte zeigte zudem keine einheitliche Mattheit.

Vergleichsbeispiel 2

Analog zum Beispiel wurde durch Extrusion eine 40 $\mu$m dicke Monofolie hergestellt. Der Gehalt und das Propylenhomopolymere sowie auch Gehalt und Art des Pigments entsprachen den Komponenten der Basisschicht aus dem Beispiel.

Die Monofolie wurde als Trennfolie bei der Herstellung von Schichtstoffplatten entsprechend dem Beispiel eingesetzt: Die Oberflächen der Schichtstoffplatten zeigten zwar einen akzeptablen Mattheitsgrad, jedoch wurden durch Auskreidungen Verletzungen der Oberflächen hervorgerufen, die diesen ein inhomogenes, pickeliges Aussehen verliehen.

Die Platten waren daher für dekorative Anwendungen nicht geeignet.

Patentansprüche

1. Durch Coextrusion hergestellte biaxial streckorientierte Mehrschichtfolie geeignet als Trennfolie zur Herstellung von dekorativen Schichtstoffplatten mit matter Oberflächenstruktur, wobei die Folie eine Basisschicht im wesentlichen aus Polypropylen und mindestens einer Deckschicht umfaßt, dadurch gekennzeichnet, daß die Basisschicht einen Anteil von 3 bis 30 Gew.-% an teilchenförmigen anorganischen Pigmenten enthält und die Deckschicht im wesentlichen

    a) 98,5 bis 99,6 Gew.-% eines Propylenpolymeren und
    b) 0,4 bis 1,5 Gew.-% eines Polydiorganosiloxans,

jeweils bezogen auf das Gewicht der Deckschicht, enthält.

2. Mehrschichtfolie nach Anspruch 1, dadurch gekennzeichnet, daß das Polypropylen der Basisschicht einen Schmelzindex im Bereich von 0,5 bis 5 g/10 min, insbesondere aber 1 bis 3 g/10 min, und die Deckschicht einen Schmelzindex im Bereich von 1,5 bis 20 g/10 min, insbesondere 3 bis 10 g/10 min, aufweist.

3. Mehrschichtfolie nach einem oder mehreren der Ansprüche 1 und 2, dadurch gekennzeichnet, daß der Schmelzindex des Polypropylens der Basisschicht niedriger ist als derjenige des Polypropylens der Deckschicht.

4. Mehrschichtfolie nach einem oder mehreren der Ansprüche 1 bis 3, dadurch gekennzeichnet, daß die Basisschicht ein teilchenförmiges Pigment enthält in einer Menge von 5 bis 25 Gew.-%, bezogen auf das Gewicht der Basisschicht.

5. Mehrschichtfolie nach Anspruch 4, dadurch gekennzeichnet, daß der mittlere Teilchendurchmesser des Pigments 0,5 bis 10 $\mu$m, vorzugsweise 1 bis 4 $\mu$m, beträgt.

6. Mehrschichtfolie nach einem oder mehreren der Ansprüche 1 bis 5, dadurch gekennzeichnet, daß die Basisschicht beidseitig eine Deckschicht trägt.

7. Mehrschichtfolie nach einem oder mehreren der Ansprüche 1 bis 6, dadurch gekennzeichnet, daß die Deckschicht vorzugsweise 0,6 bis 1,2 Gew.-%, bezogen auf das Gewicht der Deckschicht, eines Polydiorganosiloxans mit einer Viskosität von 1 000 bis 100 000 mm$^2$/s, vorzugsweise 20 000 bis 50 000 mm$^2$/s, enthält.

8. Mehrschichtfolie nach einem oder mehreren der Ansprüche 1 bis 7, dadurch gekennzeichnet, daß die Oberflächenrauhigkeit $R_z$ der Deckschicht 1,0 bis 3,0 $\mu$m beträgt.

9. Mehrschichtfolie nach einem oder mehreren der Ansprüche 1 bis 8, dadurch gekennzeichnet, daß ihre Gesamtdicke 20 bis 60 $\mu$m, vorzugsweise 25 bis 50 $\mu$m, und die Dicke der Deckschicht 0,3 bis 5 $\mu$m, vorzugsweise 0,5 bis 2,5 $\mu$m, beträgt.

10. Verfahren zur Herstellung einer Mehrschichtfolie nach einem oder mehreren der Ansprüche 1 bis 9, dadurch gekennzeichnet, daß die Schmelzen der Mischungen für die Basisschicht und der Deckschicht coextrudiert werden, die resultierende Vorfolie abgekühlt und diese anschließend in Längsrichtung vorzugsweise um das 4- bis 7fache und in Querrichtung vorzugsweise um das 7- bis 10fache streckorientiert wird und abschließend eine Thermofixierung erfolgt, wobei diese etwa 0,5 bis 10 s lang bei einer Temperatur von 150 bis 160 °C durchgeführt wird.

11. Verwendung der Mehrschichtfolie nach einem oder mehreren der Ansprüche 1 bis 9 als Trennfolie beim Verpressen und Aushärten von hochwertigen dekorativen Schichtstoffplatten auf Phenolharzbasis mit mattierter Oberfläche.

12. Verwendung einer durch Coextrusion hergestellten biaxial streckorientierten Mehrschichtfolie mit matter Oberflächenstruktur, wobei die Folie eine Basisschicht im wesentlichen aus Polypropylen und mindestens einer Deckschicht umfaßt, dadurch gekennzeichnet, daß die Deckschicht im wesentlichen

    a) 98,5 bis 99,6 Gew.-% eines Propylenpolymeren und
    b) 0,4 bis 1,5 Gew.-% eines Polydiorganosiloxans,

jeweils bezogen auf das Gewicht der Deckschicht, enthält, als Trennfolie beim Verpressen und Aushärten von hochwertigen dekorativen Schichtstoffplatten auf Phenolharzbasis mit mattierter Oberfläche.

## Claims

1. Biaxially stretch-oriented multilayer film produced by coextrusion and suitable as a release sheet in the production of decorative laminate panels having a matte surface finish, said film being comprised of a base layer essentially comprising polypropylene and of at least one top layer, characterized in that said base layer comprises 3 to 30 % by weight of fine-particulate inorganic pigments and that said top layer essentially comprises

    a) 98.5 to 99.6 %, by weight of a propylene polymer and
    b) 0.4 to 1.5 % by weight of a polydiorganosiloxane,

each time related to the weight of said top layer.

2. Multilayer film as claimed in Claim 1, wherein the polypropylene of the base layer has a melt flow index within the range of 0.5 to 5 g/10 min, in particular of 1 to 3 g/10 min, and the top layer has a melt flow index within the range of 1.5 to 20 g/10 min, in particular of 3 to 10 g/10 min.

3. Multilayer film as claimed in one or several of Claims 1 and 2, wherein the melt flow index of the polypropylene used for the base layer is inferior to the melt flow index of the polypropylene used for the top layer.

4. Multilayer film as claimed in one or several of Claims 1 to 3, wherein a fine-particulate pigment is contained in the base layer in an amount of 5 to 25 % by weight, relative to the weight of the base layer.

5. Multilayer film as claimed in Claim 4, wherein the pigment has a mean particle diameter of 0.5 to 10 Mikrometer, preferably of 1 to 4 Mikrometer.

6. Multilayer film as claimed in one or several of Claims 1 to 5, wherein both surfaces of the base layer are provided with a top layer.

7. Multilayer film as claimed in one or several of Claims 1 to 6, wherein the top layer preferably contains 0.6 to 1.2 % by weight, relative to the weight of the top layer, of a polydiorganosiloxane having a viscosity of 1,000 to 100,000 mm²/s, preferably of 20,000 to 50,000 mm²/s.

8. Multilayer film as claimed in one or several of Claims 1 to 7, wherein the peak-to-valley height $R_z$ of the top layer is 1.0 to 3.0 Mikrometer.

9. Multilayer film as claimed in one or several of claims 1 to 8, which has a total thickness of 20 to 60 Mikrometer, preferably of 25 to 50 Mikrometer, the thickness of the top layer being 0.3 to 5 Mikrometer, preferably 0.5 to 2.5 Mikrometer.

10. Process for the manufacture of a multilayer film as claimed in one or several of Claims 1 to 9, wherein the melts corresponding to the compositions employed for the base layer and the top layer are coextruded, the resulting cast film is cooled down, subsequently stretch-oriented in the longitudinal direction by a factor of preferably 4 to 7 and in the transverse direction by a factor of preferably 7 to 10, and finally heat-set, this heat-setting treatment being performed at a temperture of 150 °C to 160 °C during 0.5 to 10 seconds.

11. Use of the multilayer film as claimed in one or several of Claims 1 to 9, as a release sheet during the pressing and curing of high-quality decorative laminate panels based on phenolic resins and having a matte surface finish.

12. Use of a biaxially stretch-oriented multilayer film produced by coextrusion and having a matte surface finish, said film being comprised of a base layer essentially comprising polypropylene and of at least one top layer, and being characterized in that said top layer essentially comprises

a) 98.5 to 99.6 % by weight of a propylene polymer and
b) 0.4 to 1.5 % by weight of a polydiorganosiloxane,

each time related to the weight of said top layer, as a release sheet during the pressing and curing of high-quality decorative laminate panels based on phenolic resins and having a matte surface finish.

## Revendications

1. Feuille multicouche produite par coextrusion, biaxialement orientée par étirage, convenant comme feuille de séparation pour préparer des panneaux stratifiés décoratifs à structure superficielle mate, la feuille comprenant une couche de base, composée essentiellement de polypropylène, et au moins une couche de recouvrement, caractérisée en ce que la couche de base contient une proportion de 3 à 30 pour cent en poids de pigments inorganiques particulaires et la couche de recouvrement contient essentiellement:
a) 98,5 à 99,6% en poids d'un polymère de propylène et
b) 0,4 à 1,5% en poids d'un poly-(diorganosiloxane),
chacun étant rapporté au poids de la couche de recouvrement.

2. Feuille multicouche selon la revendication 1, caractérisée en ce que le polypropylène de la couche de base présente un indice de fluidité à l'état fondu dans la zone de 0,5 à 5 g/10 min., en particulier de 1 à 3 g/10 min et la couche de recouvrement présente un indice de fluidité à l'état fondu dans la zone de 1,5 à 20 g/10 min., en particulier de 3 à 10 g/10 min.

3. Feuille multicouche selon une ou plusieurs des revendications 1 et 2, caractérisée en ce que l'indice de fluidité à l'état fondu du polypropylène de la couche de base est plus bas que celui du polypropylène de la couche de recouvrement.

4. Feuille multicouche selon une ou plusieurs des revendications 1 à 3, caractérisée en ce que la couche de base contient un pigment particulaire, en une quantité de 5 à 25% en poids, par rapport au poids de la couche de base.

5. Feuille multicouche selon la revendication 4, caractérisée en ce que le diamètre moyen des particules du pigment est de 0,5 à 10 $\mu$m, de préférence de 1 à 4 $\mu$m.

6. Feuille multicouche selon une ou plusieurs des revendications 1 à 5, caractérisée en ce que la couche de base porte des deux côtés une couche de recouvrement.

7. Feuille multicouche selon une ou plusieurs des revendications 1 à 6, caractérisée en ce que la couche de recouvrement contient de préférence 0,6 à 1,2% en poids, par rapport au poids de la couche de recouvrement, d'un poly-(diorganosiloxane) ayant une viscosité de 1000 à 100 000 mm²/s, de préférence de 20 000 à 50 000 mm²/s.

8. Feuille multicouche selon une ou plusieurs des revendications 1 à 7, caractérisée en ce que la rugosité superficielle Rz de la couche de recouvrement est de 1,0 à 3,0 $\mu$m.

9. Feuille multicouche selon une ou plusieurs des revendications 1 à 8, caractérisée en ce qu'elle a une épaisseur totale de 20 à 60 $\mu$m, de préférence de 25 à 50 $\mu$m, et l'épaisseur de la couche de recouvrement est de 0,3 à 5 $\mu$m, de préférence de 0,5 à 2,5 $\mu$m.

10. Procédé pour préparer une feuille multicouche selon une ou plusieurs des revendications 1 à 9, caractérisé en ce que l'on coextrude les mélanges à l'état fondu correspondant à la couche de base et à la couche de recouvrement, on refroidit la feuille primaire obtenue et on oriente ensuite celle-ci par étirage, longitudinalement environ 4 à 7 fois de préférence et transversalement environ 7 à 10 fois de préférence, et on effectue enfin un thermofixage, ce dernier étant réalisé pendant une durée d'environ 0,5 à 10 s à une température de 150 à 160°C.

11. Utilisation de la feuille multicouche selon une ou plusieurs des revendications 1 à 9 comme feuille de séparation lors du pressage et de la réticulation de panneaux stratifiés décoratifs de haute qualité, à base de résine phénolique, à surface d'aspect mat.

12. Utilisation d'une feuille multicouche obtenue par coextrusion, biaxialement orientée par étirage, à structure superficielle mate, la feuille comprenant une couche de base, composée essentiellement de polypropylène, et au moins une couche de recouvrement, et étant caractérisée en ce que la couche de recouvrement contient essentiellement:
a) 98,5 à 99,6% en poids d'un polymère de propylène et
b) 0,4 à 1,5% en poids d'un poly-(diorganosiloxane),
chacun étant rapporté au poids de la couche de recouvrement, en tant que feuille de séparation lors du pressage et de la réticulation de panneaux stratifiés décoratifs de haute qualité, à base de résine phénolique, à surface d'aspect mat.